Europäisches Patentamt

European Patent Office

Office européen des brevets

(19)

(11) Numéro de publication: **0 053 955**
**B2**

(12) **NOUVEAU FASCICULE DE BREVET EUROPEEN**

(45) Date de publication du nouveau fascicule du brevet: **20.06.90**

(51) Int. Cl.⁵: **F 16 G 11/04, E 01 D 11/00**

(21) Numéro de dépôt: **81401709.1**

(22) Date de dépôt: **27.10.81**

(54) **Dispositif d'ancrage pour câble de précontrainte comprenant un grand nombre de brins.**

(30) Priorité: **04.12.80 FR 8025757**

(43) Date de publication de la demande:
**16.06.82 Bulletin 82/24**

(45) Mention de la délivrance du brevet:
**20.06.90 Bulletin 90/25**

(45) Mention de la decision concernant l'opposition:
**02.01.85 Bulletin 85/01**

(84) Etats contractants désignés:
**AT BE CH DE GB IT LI LU NL SE**

(56) Documents cités:
**CH-A- 534 786**
**DE-A-2 627 524**
**DE-A-3 002 024**
**DE-B-1 140 332**
**FR-A-1 330 787**
**GB-A- 794 561**
**US-A-3 658 296**

**Dissertation Karl Schütt, pp. 122, 123**
**Deutscher Ausschuss für Stahlbeton, Heft 325,**
**Berlin 1981 p. 26**

(73) Titulaire: **FREYSSINET INTERNATIONAL (STUP)**
**66 route de la Reine**
**F-92100 Boulogne Billancourt (FR)**

(72) Inventeur: **de la Fuente, Carlos**
**7, rue du sergent Bobillot**
**F-92000 Nanterre (FR)**

(74) Mandataire: **Bloch, Robert et al**
**2, square de l'Avenue du Bois**
**F-75116 Paris (FR)**

EP 0 053 955 B2

Courier Press, Leamington Spa, England.

**Description**

La présente invention concerne un dispositif d'ancrage pour un câble de précontrainte comprenant un grand nombre de brins, c'est-à-dire de fils individuels ou de torons formés chacun d'une pluralité de fils.

De tels câbles sont utilisés pour fournir de très importants efforts de précontrainte ou encore pour constituer des haubans de support d'ouvrage, des suspentes ou des câbles de ponts suspendus.

On sait que, pour pouvoir imposer à chacun des brins une tension déterminée et contrôler celle-ci, les brins sont ancrés individuellement dans le dispositif d'ancrage. A cette fin on peut utiliser le clavetage de chaque brin dans un orifice évasé qu'il traverse, ou bien on peut sceller le brin dans un tel orifice ou le munir d'un écrou ou d'une tête refoulée.

Lorsque les dits orifices d'ancrage sont pratiqués dans un même bloc, notamment une même plaque métallique, leur juxtaposition, et l'épaisseur de métal qu'il convient de ménager, pour la résistance de l'ensemble, entre deux orifices voisins, conduisent à des surfaces considérables. Comme il est nécessaire d'épanouir les brins à l'extrémité du câble, pour pouvoir les ancrer dans ces orifices écartés les uns des autres, la déviation ainsi imposée aux brins, spécialement à la périphérie du câble, peut, en raison de la déformation qui leur est ainsi imposée, entraîner leur affaiblissement et accroître leurs risques de rupture.

Pour réduire la déviation imposée aux brins à l'extrémité d'un tel câble pour permettre leur ancrage, il a été proposé dans le document GB—A-794 561, d'ancrer les brins individuellement en étages superposés sur une pluralité de disques fixés à un élément tubulaire central par filetage, chaque disque porteur de brins pouvant être situé au-dessus d'un autre disque de façon à recevoir d'autres brins sans venir en contact avec ceux déjà fixés au disque au-dessus duquel il se trouve.

La présente invention vise à améliorer cette disposition en la simplifiant et en lui permettant d'assurer une transmission parfaite de la tension d'un disque au suivant.

A cet effet l'invention a pour objet un dispositif d'ancrage pour câble tendu comprenant un grand nombre de brins ancrés individuellement en étages superposés sur une pluralité de plaques entre lesquelles sont répartis les ancrages individuels des brins, les dites plaques étant accolées de manière que la face interne d'une plaque extérieure repose sur la face externe d'une plaque intérieure et les brins ancrés dans les plaques les plus extérieures par rapport à l'extrémité des brins traversent les plaques situées vers l'intérieur dans des forages situés entre les ancrages portés par ces dernières plaques.

Selon l'invention les forages de passage peuvent être cylindrique et répartis entre les d'ancrage, ce qui permet de rapprocher ces orifices en conservant entre ceux-ci une quantité de matière suffisante pour fournir la résistance nécessaire, matière qui n'est que peu affaiblie par le forage de passage situé entre ces orifices.

Les dessins annexés permettent de bien comprendre comment l'invention peut être mise en œuvre.

La figure 1 est une coupe schématique d'un dispositif d'ancrage selon l'invention, coupe passant par les ancrages de trois brins situés à trois niveaux différents.

Les figures 2, 3 et 4 montrent en plan les trois plaques d'un dispositif d'ancrage destiné à un câble à trente sept brins.

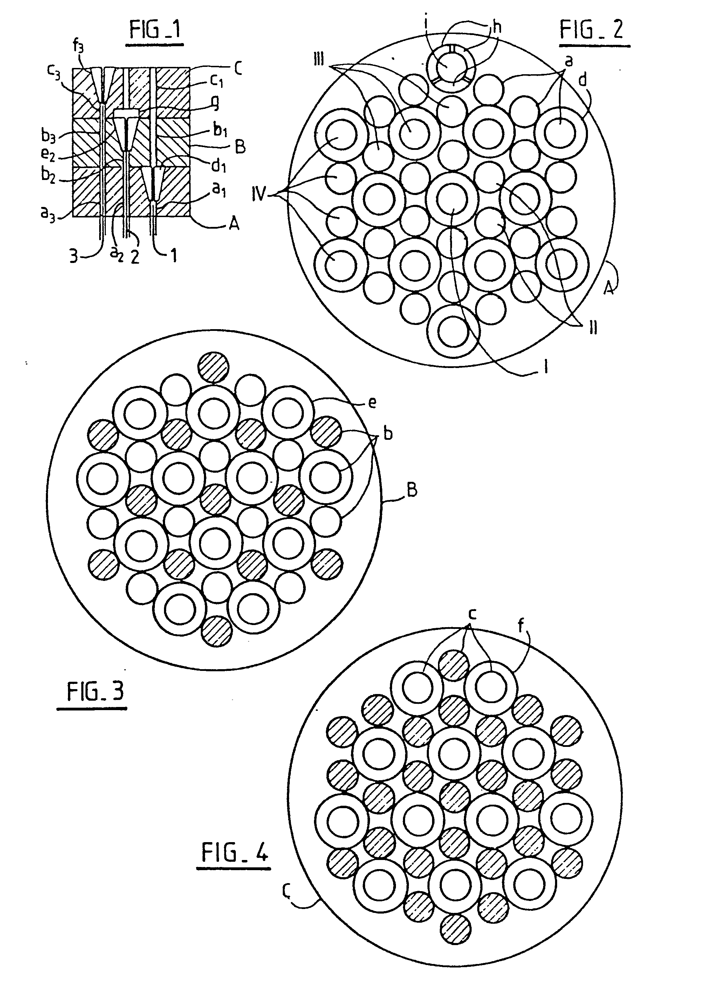

Sur la figure 1 trois plaques A, B, C sont superposées pour l'ancrage des brins d'un câble dont seuls les brins 1, 2 et 3 sont figurés. Le brin 1 engagé dans le forage $a_1$ de la plaque A est ancré dans l'orifice $d_1$ situé à la face supérieure de cette plaque, le brins 2 traverse les forages $a_2$ et $b_2$ pour être ancré dans l'orifice $e_2$ à la face supérieure de la plaque B. Enfin le brin 3 passe par les forages $a_3$, $b_3$ et $c_3$ pour être ancré dans l'orifice $f_3$ à la face supérieure de la plaque C.

On peut se contenter de ménager dans les plaques des forages indispensables au passage de chaque brin. On peut aussi, pour un même brin, munir les plaques de forages de plus ou moins grand diamètre ou de section différente du cercle pour permettre une action de blocage ou de libération des moyens d'ancrage de ce brin dans les orifices de plaques intérieures. On peut aussi prolonger un forage de la plaque intérieure tel que $a_1$ par les forages alignés $b_1$ et $c_1$. Ainsi toutes les plaques peuvent être initialement identiques et munies ensuite d'évasement correspondant aux orifices d'ancrage. On peut enfin, sur la face inférieure des plaques en contact avec des plaques situées au-dessous, ménager des élargissements g (figure 1) de façon que l'ancrage engagé dans l'orifice $e_2$, en l'espèce, s'il dépasse le niveau de la plaque B, ne puisse gêner le repos de celle-ci sur la plaque A.

Dans la réalisation montrée par les figures 2, 3 et 4 le câble à trente sept brins est constitué par un brin central I, une première couche II de six brins, un seconde couche III de douze brins, enfin une couche périphérique IV de dix-huit brins.

Dannns la plaque A est ancré le brin central I, six brins de la couche III et six de la couche IV, soit treize brins. Dans la plaque B sont ancrés trois brins de la couche II, trois brins de la couche III et six de la couche IV, soit douze brins. Dans la plaque C enfin, sont aussi ancrés trois brins de la couche II, trois de la couche III et six de la couche IV. Autrement dit, les plaques B et C sont identiques mais, en service, décalées de 60° autour de leur axe commun. On remarquera en outre qu'entre les ancrages disposés aux trois sommets d'un triangle équilatéral est situé, au centre de celui-ci, un forage de passage.

Dans chaque orifice d'ancrage (figure 2) un brin 1 peut être maintenu par trois clavettes h qui l'entourent, dont l'ensemble, de manière connue, forme un tronc de cône engagé dans l'orifice conique d'ancrage.

Sur les figures 3 et 4, pour la clarté, les forages situés au delà des ancrages ont été hachurés; ils pourraient ne pas exister. Si tous les forages sont conservés, la fabrication des plaques est facilitée; de plus, lorsque le câble doit pouvoir être remplacé par relâchement de la tension de tous les brins, il peut être avantageux de faire traverser, à tous les brins, l'ensemble des plaques afin qu'ils dépassent tous le dispositif d'ancrage.

La plaque A étant en place, on y ancre les treize brins dans les orifices d qui y sont prévus, puis on met en place la plaque B et, après mise en tension, on y ancre les douze brins qui traversent les orifices e et enfin on procède de même pour la plaque C afin d'ancrer les douze derniers brins dans les orifices f.

On peut aussi, dans le cas d'ancrage par mors constitués de plusieurs clavettes, mettre en place les trois plaques en disposant les mors dans leurs logements, autour de chaque câble, et procéder ensuite à mise en tension du câble en tirant sur l'ensemble des brins. L'ancrage s'effectue alors par autoblocage des clavettes lors du relâchement de l'action du vérin.

On peut aussi agir sur les clavettes des plaques intérieures à travers les forages, tels $b_1$ et $c_1$ (voir figure 1) en particulier si ces forages ont une section en trèfle ou bien sont de diamètre suffisant pour permettre le passage d'une tige de refoulement des clavettes.

Pour des commodités d'emploi, les plaques peuvent être, en particulier dans le cas de câbles très importants, fractionnées en un certain nombre d'éléments en forme de secteurs capables d'être juxtaposés.

Le dispositif d'ancrage selon l'invention peut être utilisé non seulement à titre définitif dans un ouvrage mais aussi comme ancrage provisoire, par exemple dans des appareils de mise en tension, tels que des vérins.

On remarquera qu'il est possible, lorsque ces ancrages similaires sont utilisés aux deux extrémités d'un même câble, de donner une même longueur à tous les brins, ce qui simplifie la préparation et le montage. En effect, à une des deux extrémités du câble, les brins ancrés dans la plaque extérieure et seront ancrés, à l'autre extrémité, dans la plaque intérieure et vice-versa; les brins ancrés à un bout dans une plaque d'un rang déterminé vers l'intérieur sont alors ancrés, à l'autre extrémité, dans une plaque de même rang, mais cette fois à partir de l'extérieur; étant évidemment entendu, comme dans l'exemple décrit, que les brins sont répartis, à chaque extrémité, en nombre pratiquement égaux pour leur ancrage entre les plaques accolées.

L'invention s'applique à tous les câbles tendus formés de brins multiples utilisés dans les techniques de la construction et des travaux plublics.

**Revendications**

1. Dispositif d'ancrage pour câble tendu comprenant un grand nombre de brins ancrés individuellement en étages superposés, sur une pluralité de plaques entre lesquelles sont répartis les ancrages individuels des brins, les brins ancrés dans les plaques les plus extérieures par rapport à l'extrémité des brins traversent les plaques situées vers l'intérieur dans des forages situés entre les ancrages portés par ces dernières plaques et lesdites plaques étant accolées de manière que la face interne d'une plaque extérieure repose sur la face externe d'une plaque intérieure.

2. Dispositif selon la revendication 1, caractérisé par le fait que les ancrages sont logés dans des orifices aménagés à l'extrémité extérieure des forages traversant les plaques.

3. Dispositif selon la revendication 1, caractérisé par le fait que les forages sont prolongés axialement dans l'ensemble des plaques au-delà des ancrages.

4. Dispositif selon la revendication 3, caractérisé par le fait que la section des prolongements de forages est choisie pour permettre une action sur l'ancrage intérieur correspondant.

5. Dispositif selon l'une des revendications 1 et 2, caractérisé par le fait que les extrémités internes des forages sont élargies en regard des orifices aménagés.

6. Dispositif selon la revendication 1, caractérisé par le fait qu'un forage de passage est, dans chaque plaque, ménagé au centre d'un triangle équilatéral dont les sommets sont occupés par des ancrages appuyés sur cette plaque.

7. Dispositif selon l'une des revendications 1 à 6, caractérisé par le fait que les orifices d'ancrage sont alignés sur les plaques.

8. Dispositif selon la revendication 1, caractérisé par le fait les ancrages sont répartis en nombres sensiblement égaux entre les diverses plaques.

9. Dispositif selon l'une des revendications 1 et 8, utilisé aux deux extrémités d'un même câble, caractérisé par le fait que, tous les brins étant de même longueur, leurs ancrages sont décalés entre les plaques d'ancrage des deux extrémités.

**Patentansprüche**

1. Verankerungsvorrichtung für Spannkabel mit einer großen Anzahl von Verseilelementen, die einzeln in übereinanderliegenden Etagen auf einer Vielzahl von Platten verankert sind, zwischen welchen die einzelnen Verankerungen der Verseilelemente verteilt sind, in der die in den in bezug auf die Verseilelementen äußersten Platten verankerten Verseilelemente die nach innen liegenden Platten in Bohrungen durchsetzen, die zwischen den von diesen letztgenannten Platten getragenen Verankerungen gelegen sind und in der die genannten Platten so zusammen geklammert sind daß die Innenseite einer äußeren Platte auf der Außenseite einer inneren Platte aufliegt.

2. Vorrichtung nach Anspruch 1, dadurch gekennzeichnet, daß die Verankerungen in Offnungen untergebracht sind, die am äußeren Ende der die Platten durchsetzenden Bohrungen vorgesehen sind.

3. Vorrichtung nach Anspruch 1, dadurch gekennzeichnet, daß die Bohrungen axial über die Verankerungen hinaus in die Plattengesamtheit verlängert sind.

4. Vorrichtung nach Anspruch 3, dadurch gekennzeichnet, daß der Querschnitt der Bohrungsverlängerungen so gewählt wird, daß eine Wirkung auf die entsprechende innere Verankerung ermöglicht wird.

5. Vorrichtung nach einen der Ansprüche 1 und 2, dadurch gekennzeichnet, daß die inneren Enden der Bohrungen in Richtung der vorgesehenen Offnungen erweitert sind.

6. Vorrichtung nach Anspruch 1, dadurch gekennzeichnet, daß eine Durchgangsbohrung in jeder Platte im Mittelpunkt eines gleichseitigen Dreiecks angeordnet ist, dessen Spitze von den auf dieser Platte abgestützten Verankerungen eingenommen werden.

7. Vorrichtung nach einem der Ansprüche 1 bis 6, dadurch gekennzeichnet, daß die Verankerungsöffnungen auf den Platten aneinander angereiht sind.

8. Vorrichtung nach Anspruch 1, dadurch gekennzeichnet, daß die Verankerungen in im wesentlichen gleicher Anzahl auf die verschiedenen Platten verteilt sind.

9. Vorrichtung nach einem der Ansprüche 1 und 8, die an den beiden Enden ein und desselben Kabels angebracht ist, dadurch gekennzeichnet, daß bei gleicher Länge aller Verseilelemente deren Verankerungen zwischen den Verankerungsplatten der beiden Enden versetzt sind.

**Claims**

1. Device for anchoring a stretched cable comprising a large number of stands anchored individually in superposed rows, on a plurality of plates between which are distributed the individual anchorings of the strands, the strands anchored in the outermost plates with respect to the end of the strands passing through the innermost plates in bores located between the anchorings borne by the latter plates and said plates being places side by side so that the inner face of an outer plate abuts on the outer face of an inner plate.

2. The device of Claim 1, wherein the anchorings are housed in orifices made at the outer end of the bores passing through the plates.

3. The device of Claim 1, wherein the bores are extended axially in all the plates beyond the anchorings.

4. The device of Claim 3, wherein the section of the bore extensions is selected to allow action on the corresponding inner anchoring.

5. The device of one of Claims 1 and 2, wherein the inner ends of the bores are widened opposite the orifices.

6. The device of Claim 1, wherein a bore for passage is made, in each plate, at the centre of an equilateral triangle whose vertices are occupied by anchorings abutting on this plate.

7. The device of one of Claims 1 to 6, wherein the anchoring orifices are aligned on the plates.

8. The device of Claim 1, wherein the anchorings are distributed in substantially equal numbers betrween the various plates.

9. The device of one of claims 1 and 8, used at the two ends of the same cable, wherein, as all the strands are of the same length, their anchorings are offset between the anchoring plates of the two ends.

FIG_1

FIG_2

FIG_3

FIG_4